# EUROPÄISCHE PATENTANMELDUNG

(11) **EP 1 136 789 A2**
(43) Veröffentlichungstag der Anmeldung: **26.09.2001**
(21) Anmeldenummer: 01105237.0
(22) Anmeldetag: 05.03.2001
(51) Int. Cl.: G01C 15/00

(54) **Konsole für Wasserwaagen, insbesondere für Laserwasserwaagen und für Rotationslaser-Apparate**

(30) Priorität: 07.03.2000 DE 20003940 U
(71) Anmelder: RIWA TEC GmbH, Messgeräte Handelsgesellschaft, 76831 Birkweiler/Pfalz (DE)
(72) Erfinder: Blatt, Hans-Peter, 76833 Frankweiler (DE)
(74) Vertreter: Ratzel, Gerhard, Dr.

(57) **Zusammenfassung**

Die Erfindung betrifft eine Konsole für Wasserwaagen, insbesondere für Laser-Wasserwaagen und für Rotationslaser-Apparate, bei der die Konsole aus einer Bodennivellierungsplatte (4), die Kugelgelenke (5) mit Arretierschrauben 5a (= Arretiervorrichtung 5a) trägt, die ihrerseits mit einem walzenförmigen Element (7), das zumindest ein Winkelmesserelement aufweist, zusammenarbeitet, wobei das Walzenelement (7) eine Drehsäule (10) trägt, in die eine Laser-Wasserwaage (16) und eine Plattform für Rotationslaser-Apparate einsetzbar ist.

## Beschreibung

Bei der Anwendung von Wasserwaagen, insbesondere Laser-Wasserwaagen ist deren Nivellierung in der Regel auf eine waagrechte und/oder senkrechte Nivellierung beschränkt.

Der vorliegenden Erfindung liegt daher die Aufgabe zu Grunde, eine Nivellier-Konsole für Wasserwaagen, insbesondere für Laser-Wasserwaagen zu schaffen, die eine Nivellierung in allen denkbaren Winkelstellungen bezüglich beliebiger Unterlagen erlaubt.

Der Begriff Unterlage im Sinne vorliegender Offenbarung bezieht sich auf alle denkbaren Bauelemente, die mittels der Wasserwaage gemessen werden oder, wie der Fachmann sagt, ins Wasser gestellt werden. Beispiele für solche Bauelemente sind Pfosten, Träger, flächige Wandelemente (Paneele).

Das Wesen vorliegender Erfindung wird an Hand der beiliegenden Figuren, die eine bevorzugte Ausführungsform darstellen, erläutert.

Mit dem Bezugszeichen 1 ist ein aus magnetischem Material, vorzugsweise Eisen bestehendes rechteckiges Lochblech bezeichnet, das über die Bohrlöcher 3 an einer (nicht gezeichneten) Wand, beispielsweise der Wand eines Innenraums eines Gebäudes befestigt ist. Mit dem Bezugszeichen 2 ist eine in der Wand zu verdübelnde Befestigungsschraube bezeichnet. Mit dem Bezugszeichen 4 ist als Bestandteil der erfindungsgemäßen Wasserwaagen-Konsole eine Bodennivellierungsplatte bezeichnet, die mit Magneten 6 ausgerüstet ist.

Mit dem Bezugszeichen 5 sind Kugelgelenke mit Arretierschrauben 5a (= Arretiervorrichtung 5a) bezeichnet, die zum Einnivellieren der Bodennivellierungsplatte 4 dienen.

Die Bodennievellierungsplatte 4 arbeitet über die Kugelgelenke 5 mit Arretierschrauben 5a (= Arretierungsvorrichtung 5a) mit einem walzenförmigen Element 7 in der Weise zusammen, dass die gewünschte Nivellierung mittels dieser Kugelgelenke 5 mit Arretierschrauben 5a (= Arretiervorrichtung 5a) entsprechend der Anzeigen der am Walzenelement 7 angeordneten Winkelmesser 8 und 12 bewirkt wird.

Das walzenförmige Element 7 trägt eine Hülse 9, in der die Drehsäule 10 angeordnet ist. Mit dem Bezugszeichen 8 ist ein Winkelmesser bezeichnet.

Mit dem Bezugszeichen 11 ist eine Klemmschraube und mit 12 eine Gradskala bezeichnet.

Das Bezugszeichen 13 bedeutet eine Klemmschraube, die zum Festklemmen der Drehsäule 10 dient.

Das Bezugszeichen 14 bedeutet einen quaderförmigen Achskörper, in welchem die Drehsäule 10 angeordnet ist.

Der Achskörper 14 trägt eine Klemmschraube 15.

Mit dem Bezugszeichen 16 ist die Laser-Wasserwaage bezeichnet, die über die Klemmschraube 20 bzw. die Klemmschraube 15 mit dem Achskörper 14 verbunden ist.

Die Laser-Wasserwaage 16 trägt einen Batteriegriff 17, in welchem die Lasereinrichtung angeordnet ist.

Mit dem Bezugszeichen 18 ist ein Winkelmesser, mit 19 eine Längslibelle und mit 21 eine Magnetbefestigung bezeichnet.

Mit dem Bezugszeichen 22 ist ein an der Bodennivellierungsplatte 4 angeordneter Adapter für ein Stativ angeordnet.

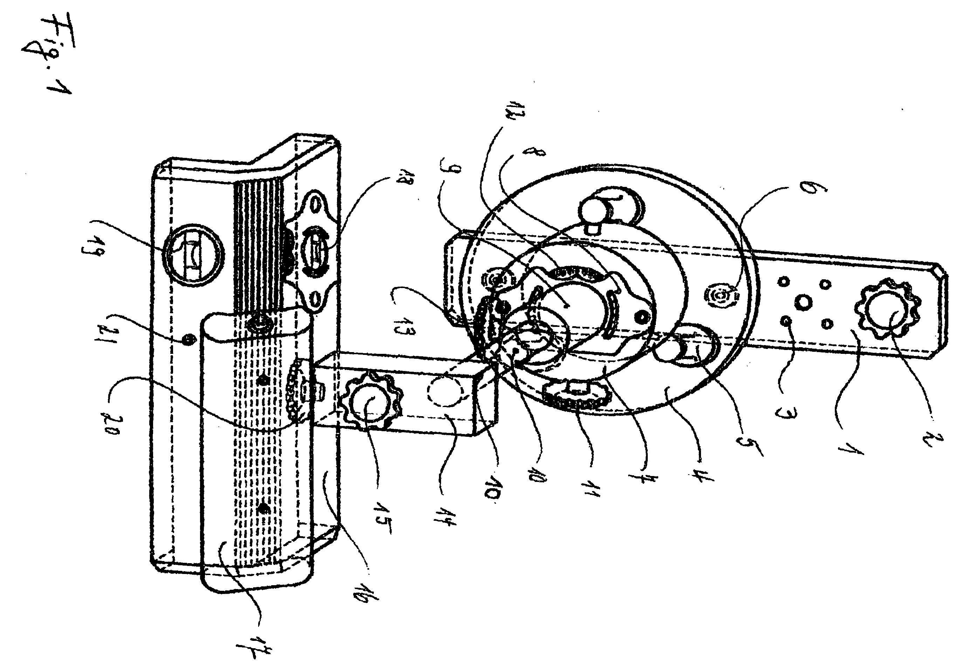

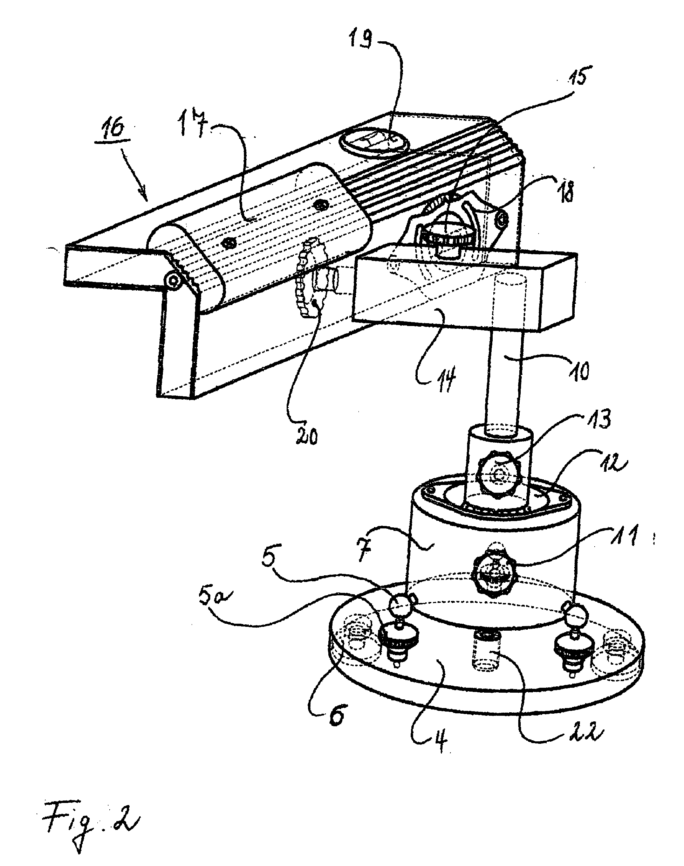

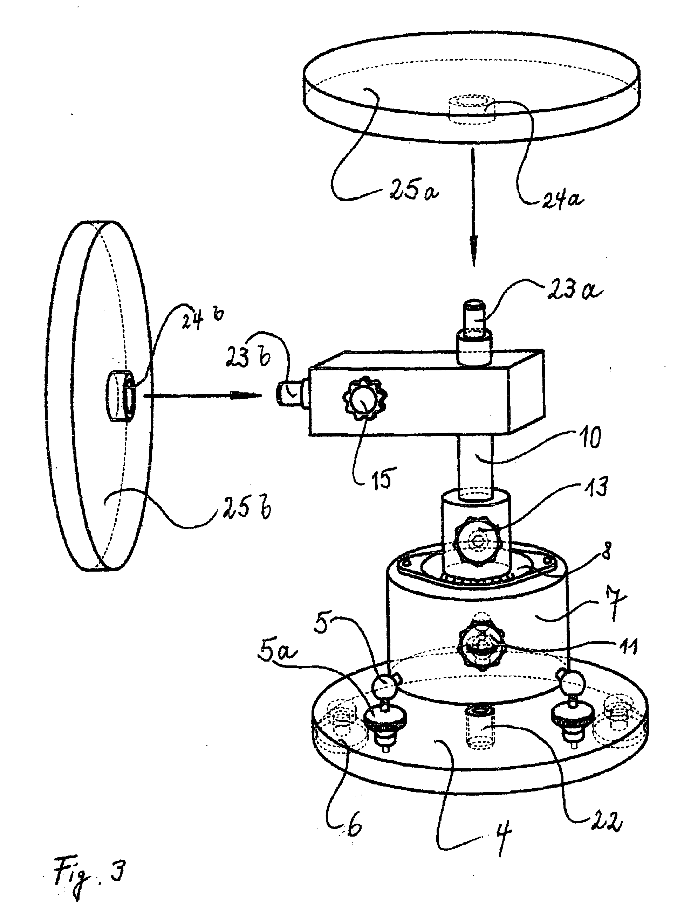

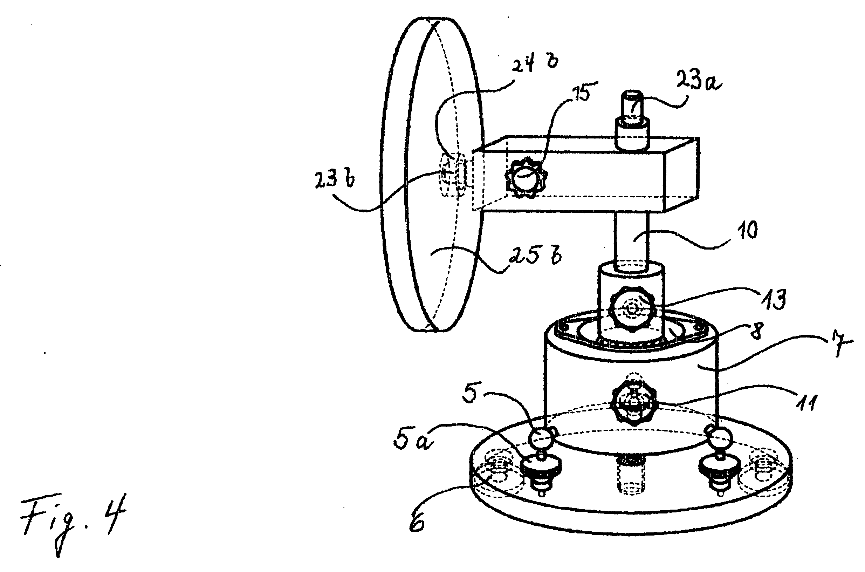

Die Figuren 3 und 4 zeigen eine Abwandlung des Erfindungsgegenstandes in der Weise, dass an Stelle der Laser-Wasserwaage sowohl an der Drehsäule 10 als auch am Achskörper 14 achsförmige Fortsätze 23a und 23b angeordnet sind, in die entsprechende Hülsenelemente 24a und 24b einsetzbar sind, wobei diese Hülsenelemente Tellerelemente 25a und 25b tragen und ihrerseits als drehbare Unterlagen für Rotationslaser-Apparate dienen.

### Bezugszeichenliste:

| Bezugszeichen | Beschreibung |
|---|---|
| 1 | Lochblech |
| 2 | Befestigungsschraube (Dübel) als Wandbefestigung |
| 3 | Variable Befestigungslöcher z.B. für Dübel |
| 4 | Bodennivellierungsplatte |
| 5 | Kugelgelenke mit Arretierschrauben 5a (= Arretiervorrichtung 5a) |
| 6 | Magnete |
| 7 | Walzenförmiges Element |
| 8 | Winkelmesser |
| 9 | Hülse |
| 10 | Drehsäule |
| 11 | Klemmschraube |
| 12 | Gradskala |
| 13 | Klemmschraube |
| 14 | Achskörper |
| 15 | Klemmschraube |
| 16 | Laser-Wasserwaage |
| 17 | Batteriegriff |
| 18 | Drehbarer Winkelmesser |
| 19 | Längslibelle |
| 20 | Klemmschraube |
| 21 | Magnetbefestigung |
| 22 | Adapter für Stativ |
| 23a + 23b | Achsförmige Fortsätze |
| 24a + 24b | Hülsenelemente |
| 25a + 25b | Tellerelemente |

## Patentansprüche

1. Konsole für Wasserwaagen, insbesondere für Laser-Wasserwaagen und für Rotationslaser-Apparate,
**dadurch gekennzeichnet,**
**dass** die Konsole aus einer Bodennivellierungsplatte (4), die Kugelgelenke (5) mit Arretierschrauben 5a (= Arretiervorrichtung 5a) trägt, die ihrerseits mit einem walzenförmigen Element (7), das zumindest ein Winkelmesserelement aufweist, zusammenarbeitet, wobei das Walzenelement (7) eine Drehsäule (10) trägt, in die eine Laser-Wasserwaage (16) und eine Plattform für Rotationslaser-Apparate einsetzbar ist.

2. Konsole nach Anspruch 1,
**dadurch gekennzeichnet,**
**dass** die Bodennivellierungsplatte (4) einen Adapter (22) für ein Stativ aufweist.

3. Konsole nach Anspruch 1,
**dadurch gekennzeichnet,**
**dass** die Bodenplatte (4) Magnetelemente (6) aufweist, die zur magnetischen Verbindung mit einer magnetisierbaren Unterlage dienen.

4. Konsole nach Anspruch 3,
**dadurch gekennzeichnet,**
**dass** die magnetisierbare Unterlage aus einem Stahl-Lochblech (1) besteht.

5. Konsole nach Anspruch 1 - 4,
**dadurch gekennzeichnet,**
**dass** das walzenförmige Element (7) eine Klemmschraube (11) aufweist.

6. Konsole nach Anspruch 5,
**dadurch gekennzeichnet,**
**dass** das walzenförmige Element (7) eine Hülse (8) mit Klemmschraube (11) aufweist.

7. Konsole nach Anspruch 1 - 6,
**dadurch gekennzeichnet,**
**dass** in der Hülse (9) eine Drehsäule (10) angeordnet ist.

8. Konsole nach Anspruch 1 - 7,
**dadurch gekennzeichnet,**
**dass** in der Drehsäule (10) ein Achskörper (14) ruht, der über eine Klemmschraube (20) mit dem Corpus einer Laser-Wasserwaage (16) verbunden ist.

9. Konsole nach Anspruch 8,
**dadurch gekennzeichnet,**
**dass** die Laser-Wasserwaage (16) einen Batteriegriff (17), in welchem die Lasereinrichtung angeordnet ist, einen Winnkelmesser (18) sowie eine Längslibelle (19) aufweist.

10. Konsole nach Anspruch 9,
**dadurch gekennzeichnet,**
**dass** an dem Achskörper (14) eine Klemmschraube (15) angeordnet ist.

11. Konsole nach Anspruch 1 - 10,
**dadurch gekennzeichnet,**
**dass** am Achskörper (14) achsförmige Fortsätze (23a und 23b) angeordnet sind.

12. Konsole nach Anspruch 11,
**dadurch gekennzeichnet,**
**dass** die achsförmigen Fortsätze (23a und 23b) einen Winkelabstand von 90° aufweisen.

13. Konsole nach Anspruch 11 und 12,
**dadurch gekennzeichnet,**
**dass** in den achsförmigen Fortsätzen (23a und 23b) Hülsenelemente (24a und 24b) angeordnet sind, die ihrerseits Tellerelemente (25a und 25b) aufweisen, die als Plattformen, insbesondere zum Tragen von Rotationslaser-Apparaten dienen.
